# EUROPÄISCHE PATENTSCHRIFT

(11) **EP 1 763 431 B1**
(45) Veröffentlichungstag und Bekanntmachung des Hinweises auf die Patenterteilung: **18.06.2008**
(21) Anmeldenummer: 06778026.2
(22) Anmeldetag: 27.07.2006
(51) Int. Cl.: B29C 65/16, C08K 3/32

(54) **LASERSCHWEISSVERFAHREN UND -MATERIAL**
LASER-BEAM WELDING METHOD AND MATERIAL
PROCEDE ET MATERIAU DE SOUDAGE PAR FAISCEAU LASER

(30) Priorität: 28.07.2005 DE 102005035914
(43) Veröffentlichungstag der Anmeldung: 21.03.2007
(73) Patentinhaber: Chemische Fabrik Budenheim KG, 55257 Budenheim (DE)
(72) Erfinder: MARKMANN, Joachim, 55452 Dorsheim (DE); WISSEMBORSKI, Rüdiger, 55435 Gau-Algesheim (DE); KOHLPAINTNER, Christian, 55218 Ingelheim (DE)
(74) Vertreter: Seiffert, Klaus
(86) Internationale Anmeldenummer: PCT/EP2006/064739
(87) Internationale Veröffentlichungsnummer: WO 2007/012660

(56) Entgegenhaltungen:
- EP-A- 1 350 818
- WO-A-02/057353
- WO-A-20/06042623
- DE-A1- 10 054 859
- US-A- 5 053 440

## Beschreibung

Die Erfindung betrifft ein Verfahren zum Laserschweißen eines ersten Materials, welches ein thermoplastisches Polymermaterial ist, mit einem zweiten Material, welches für das verwendete Laserlicht durchlässig ist, wobei man für das Laserschweißen das Laserlicht an der Schweißstelle durch das zweite Material auf das erste Material richtet und wenigstens das erste Material an der Schweißstelle unter der Einwirkung des Laserlichts erweicht.

Des weiteren betrifft die Erfindung die Verwendung von Metallphosphaten und/oder Metallphosphiten zur Herstellung eines laserschweißbaren thermoplastischen Polymermaterials sowie ein solches laserschweißbares thermoplastisches Polymermaterial als solches.

Das Laserschweißen von Kunststoffen hat sich in den letzten Jahren als eine vielversprechende, ausgereifte Verbindungstechnologie etabliert und löst in der Verarbeitung hochwertiger Kunststoffe immer mehr die herkömmlichen Schweißsysteme ab. Beim Laserschweißen wird das sogenannte "Überlappungsschweißen" oder "Durchstrahlschweißen" angewendet. Dabei werden zwei miteinander zu verschweißende Materialien übereinander gelegt. Eines der beiden Materialien muß für das Laserlicht durchlässig sein. Das andere Material, ein thermoplastischer Kunststoff, muß das Laserlicht so stark absorbieren, daß es durch die Energie des Laserlichts erhitzt und erweicht wird, damit es sich mit dem ersten Material verbinden kann. Ist auch das erste Material ein thermoplastischer Kunststoff, so wird auch dieser an der Schweißstelle aufgrund von Wärmeleitung erhitzt und erweicht und es entsteht ein gemeinsames Schmelzbad, das bei Verfestigung eine stabile Verbindung der beiden Materialien liefert.

Die Absorption der Laserstrahlung durch das thermoplastische Polymermaterial wird in den meisten Fällen nicht durch die Polymermatrix selbst, sondern durch darin eingebettete Additive, wie Pigmente bzw. Farbstoffe, bestimmt. Diese Absorber weisen in der Regel eine ausgeprägte Eigenfarbe auf, wie beispielsweise im Falle von Ruß ein Tiefschwarz.

Ein Großteil der Anwendungen des Laserschweißens liegt in der Medizintechnik, im Automobilbau, der Elektrotechnik und in der Luftfahrttechnik. Hier werden häufig dunkel gefärbte Kunststoffe verwendet, die das Laserlicht gut absorbieren. Helle oder gar transparente Kunststoffe ließen sich bislang prinzipbedingt nur unzulänglich verschweißen. Die Laserschweißbarkeit von thermoplastischen Kunststoffen war daher lange ein Kompromiß zwischen der technischen Realisierbarkeit und den Farbwünschen für das Produkt. Die Herstellung von transparenten laserschweißbaren bzw. lasergeschweißten Produkten stellte daher lange Zeit ein Problem dar und es besteht auf vielen Gebieten ein Bedarf nach solchen Produkten. In der Medizintechnik sind beispielsweise überwiegend optisch weiße oder transparente Produkte gefragt.

Die Firma BASF bietet als Laseradditiv unter der Bezeichnung Lumogen^{®} IR ein Naphthalimidderivat an, welches eine starke Absorption bei gängigen Laserwellenlängen im nahen Infrarotbereich (NIR; 765 bzw. 788 nm) und keine Absorption im sichtbaren Bereich (d. h. keine Eigenfarbe) besitzt. Das Additiv soll die mechanischen Eigenschaften der Polymermatrix nicht beeinflussen und nicht toxisch sein.

Additive für das Laserschweißen von Kunststoffen müssen die Eigenschaften besitzen, die den Anforderungen an den Kunststoff entsprechen. Sie sollen die Farbvorgaben, das Erscheinungsbild und die an das Produkt gestellten chemischen und physikalischen Anforderungen sowie die Richtlinien und gesetzlichen Vorgaben erfüllen. Zu den Eigenschaften zählen beispielsweise Kunststoffverträglichkeit, Hitzebeständigkeit, Farbechtheit etc. So ist ein besonderes Augenmerk sowohl auf die Wahl des Polymers als auch der Additive zu richten, wobei letzteres zum einen der Farbgestaltung und zum anderen auch den transmittierenden bzw. absorbierenden Eigenschaften für das Laserlicht Rechnung tragen muß.

Die WO 01/00719 A1 beschreibt lasermarkierbare Partikel, die Antimonoxid enthalten. Die Nachteile dieses Additivs sind nicht nur die mangelnde Transparenz, sondern auch die unerwünschte Toxizität des Antimonoxids.

Die DE 100 54 859 A1 beschreibt ein Verfahren zum Laserschweißen, bei dem die Kunststoffe Ruß als absorbierendes Pigment enthalten. Damit lassen sich allerdings keine hellen oder gar transparenten Formteile erzeugen.

Die DE 20 2004 003 362 U1 beschreibt Metalloxide in nanoskaligen Korngrößen. Die Herstellung solcher Pigmente ist allerdings sehr aufwendig und mit hohen Kosten verbunden.

Die EP 0 797 511 B1 beschreibt lasermarkierbare Kunststoffmaterialien, die plättchenförmige, transparente oder semitransparente, glimmerartige Pigmente enthalten. Allerdings wird durch die glimmerartige Beschaffenheit der Pigmente oft eine unerwünschte Streuung des Laserlichts hervorgerufen.

Die WO 98/28365 A1 beschreibt lasermarkierbare Polymerzusammensetzungen aus einem Polymethylenacrylat mit einem Acrylatcomonomeren und einem zweiten Polymer aus Styrol und Maleinsäureanhydrid.

Die EP 1 029 650 B1 beschreibt als absorbierendes Additiv ein Gelbpigment und ein Violettpigment. Mit diesen Pigmenten ist eine deutliche festgelegte Färbung der Kunststoffmaterialien verbunden, die in vielen Fällen nicht erwünscht ist.

Die DE 103 03 193 A1 beschreibt Zinksulfid als absorbierendes Additiv, das aber eine eher geringe Absorptionsfähigkeit besitzt.

Die DE 100 54 859 A1 offenbart ein Verfahren gemäß dem Oberbegriff des Anspruchs 1. Die US 5 053 440 offenbart ein Produkt gemäß dem Oberbegriff des Anspruchs 11. Die Aufgabe der vorliegenden Erfindung bestand darin, die Nachteile bekannter Additive für das Laserschweißen zu überwinden und neue Additive bereitzustellen, die vielfältig und bei verschiedenen Wellenlängen des Laserlichts einsetzbar, nicht toxisch, im wesentlichen farbneutral und farbecht, hitzebeständig, kostengünstig und kunststoffverträglich sind und nur geringen Einfluß auf die physikalischen Eigenschaften des Kunststoffmaterials haben. Die Erfindung soll auch ein entsprechendes Verfahren zum Laserschweißen und ein entsprechendes laserschweißbares thermoplastisches Polymermaterial bereitstellen.

Gelöst wird diese Aufgabe durch die Bereitstellung von Metallphosphaten und/oder Metallphosphiten als neue Additive für das Laserschweißen bzw. die Verwendung von Metallphosphaten und/oder Metallphosphiten in einem entsprechenden Laserschweißverfahren. Die Metallphosphate und/oder Metallphosphite können als Einzelverbindungen, in Gemischen verschiedener Verbindungen oder als Mischsalze in dem thermoplastischen Polymermaterial enthalten sein, welches das Laserlicht bei dem Laserschweißverfahren absorbieren und unter dessen Einwirkung erweichen soll. Die Metallphosphate und/oder Metallphosphite sind in dem thermoplastischen Polymermaterial in einer Menge von 0,001 bis 20 Gew.-% enthalten. Sie haben eine mittlere Teilchengröße (D50) von weniger als 50 µm.

Es wurde überraschenderweise gefunden, daß die erfindungsgemäßen Metallphosphate und Metallphosphite hervorragende Absorbereigenschaften besitzen. Ein Großteil dieser Phosphate und Phosphite läßt sich in vielen verschiedenen Kunststoffen gut dispergieren und zeigt eine sehr hohe Transparenz für Licht im sichtbaren Wellenlängenbereich. Dennoch besitzen die erfindungsgemäßen Phosphate und Phosphite eine hohe Absorption für Laserlicht. Sie zeichnen sich daher durch keine oder nur geringe Eigenfärbung aus, weshalb sie sich für die Herstellung von transparenten oder individuell gefärbten Produkten hervorragend eignen. Einige der erfindungsgemäßen Metallphosphate und Metallphosphite besitzen eine relativ helle Farbe, welche sich durch Farbpigmente in eine gewünschte Richtung verändern läßt.

Für das Laserschweißen werden die absorbierenden Laseradditive in den Materialteil eingearbeitet, der für das Laserlicht nicht transparent sein und beim Laserschweißen unter dessen Einwirkung erweicht werden soll.

Besonders bevorzugte Laseradditive sind Metallphosphate, ausgewählt unter Orthophosphaten, Polyphosphaten, Pyrophosphaten und Hydroxidphosphaten. In einer besonders bevorzugten Ausführungsform sind die Metallphosphate unter Kupfer-Phosphaten, Zinn-Phosphaten, Eisen-Phosphaten, Nickel-Phosphaten, Molybdän-Phosphaten, Kobalt-Phosphaten, Mangan-Phosphaten und Antimon-Phosphaten ausgewählt. Als ganz besonders geeignet haben sich Kupfer-Phosphate, Zinn-Phosphate und Eisen-Phosphate erwiesen.

In einer ganz besonders bevorzugten Ausführungsform der Erfindung wird als Laseradditiv Kupfer-Hydroxidphosphat [KHP; Cu₄(OH)₂(PO₄)₂] verwendet. KHP vereinigt eine Vielzahl von Vorteilen gegenüber bekannten Additiven für das Laserschweißen. KHP verändert, wenn es in eine thermoplastische Polymermatrix eingearbeitet wird, kaum die Eigenfarbe der Matrix. Es eignet sich daher hervorragend für die Herstellung heller Produkte. Darüber hinaus besitzt es eine sehr hohe Absorption für Laserlicht im nicht sichtbaren Bereich (beispielsweise bei 1064 nm eines Nd:YAG-Lasers). Als idealer Absorber auf dem Gebiet des Laserschweißens wird nach wie vor Ruß als Additiv angesehen, welcher jedoch die bekannten Nachteile der tiefschwarzen Färbung besitzt. Die Absorptionsfähigkeit von Ruß wird mit 100% angenommen. Die Messung der Absorptionsfähigkeit erfolgt bei 840 nm mit einem TMG Vario der Firma LaserQuipment. Demgegenüber besitzt KHP eine Absorptionsfähigkeit von 98%, was nahezu derjenigen von Ruß entspricht. Andere bekannte Additive für das Laserschweißen besitzen entweder bei weitem nicht eine derart hohe Absorptionsfähigkeit oder sie zeichnen sich durch eine äußerst intensive und starke Eigenfärbung im sichtbaren Bereich des Lichtspektrums aus.

In einer bevorzugten Ausführungsform der vorliegenden Erfindung sind die Metallphosphate und/oder Metallphosphite in dem thermoplastischen Polymermaterial in einer Menge von 0,1 bis 10 Gew.-%, vorzugsweise 0,2 bis 5 Gew.-%, besonders bevorzugt 0,3 bis 2 Gew.-% enthalten. Die optimale Menge der in die thermoplastischen Polymermaterialien einzuarbeitenden Additive läßt sich vom Fachmann auf einfache Weise durch wenige Versuche ermitteln. Wesentliche Kriterien für die Auswahl der optimalen Menge sind eine hohe Absorptionsfähigkeit für das verwendete Laserlicht und eine möglichst geringe Beeinträchtigung der Materialeigenschaften des verwendeten thermoplastischen Kunststoffmaterials für die bezweckte Anwendung.

Die erfindungsgemäßen Metallphosphate und/oder Metallphosphite in dem thermoplastischen Polymermaterial haben eine mittlere Teilchengröße (D50) von weniger als 50 µm, vorzugsweise weniger als 15 µm, besonders bevorzugt weniger als 10 µm. Je geringer die Teilchengröße ist, desto höher ist die Anzahl der Teilchen pro Gewichtseinheit. Eine geringere Teilchengröße und eine höhere Teilchenanzahl erlauben eine gleichmäßigere Verteilung der Teilchen in dem thermoplastischen Polymermaterial und eine verbesserte Absorptionsfähigkeit, was wiederum eine bessere Laserschweißbarkeit liefert. Bei Verwendung geringerer Teilchengrößen der Metallphosphate und/oder Metallphosphite kann im Vergleich zu größeren Teilchengrößen weniger Material zur Erzielung der gleichen Absorptionsfähigkeit eingesetzt werden. Dies spart Additiv ein, und der Einfluß der Additive auf die physikalischen und strukturellen Eigenschaften der Matrix kann so gering wie möglich gehalten werden.

Für das erfindungsgemäße Verfahren zum Laserschweißen lassen sich verschiedene auf dem Gebiet üblicherweise eingesetzte Laserlichtquellen verwenden. Besonders bevorzugt werden Nd:YAG-Laser mit einer Wellenlänge von 1064 nm oder auch mit der halben Wellenlänge von 532 nm eingesetzt. Geeignet sind jedoch auch Diodenlaser mit einer Wellenlänge im Bereich von 808 bis 940 nm. Überraschenderweise eignen sich die erfindungsgemäßen Additive auch für das Laserschweißen mit einem CO₂-Laser mit Wellenlängen in der Größenordnung um 10000 nm, insbesondere bei Verwendung von KHP als Additiv. Ein besonderer Vorteil der Absorptionsfähigkeit der erfindungsgemäßen Additive weit außerhalb des sichtbaren Wellenlängenbereichs liegt darin, daß das obere Material, durch welches das Laserlicht auf das thermoplastische Polymermaterial mit den Additiven hindurchstrahlt, auch ein im sichtbaren Bereich nicht transparentes Material sein kann. Das obere Material kann beispielsweise mit Farbpigmenten eingefärbt sein, die im nicht sichtbaren Wellenlängenbereich des verwendeten Laserlichts nicht absorbieren und somit das Laserlicht ungehindert zu dem unteren thermoplastischen Polymermaterial hindurchtreten lassen, wo es aufgrund der erfindungsgemäßen Additive absorbiert wird und zum Erhitzen und Erweichen des Polymermaterials führt. Das obere Material kann farblich individuell gestaltet sein, ohne daß seine Transparenz für das Laserlicht und damit seine Laserschweißbarkeit beeinträchtigt sind.

Die Energiedichten der erfindungsgemäß eingesetzten Laser liegen im allgemeinen im Bereich von 0,3 mJ/cm² bis 50 J/cm², vorzugsweise im Bereich von 0,3 mJ/cm² bis 10 J/cm². Es lassen sich auch vorteilhaft gepulste Laser einsetzen, wobei die Pulsfrequenz zweckmäßigerweise im Bereich von 1 bis 30 kHz liegt.

Bei dem Verfahren zum Laserschweißen wird ein erstes Material, welches ein thermoplastisches Polymermaterial ist, mit einem zweiten Material, welches für das verwendete Laserlicht durchlässig ist, verschweißt, indem man die Materialien übereinander anordnet und das Laserlicht an der Schweißstelle durch das zweite Material auf das erste Material richtet und wenigstens das erste Material an der Schweißstelle unter der Einwirkung des Laserlichts erweicht. Vorteilhaft ist es, wenn auch das zweite Material, welches für das verwendete Laserlicht durchlässig ist, ein thermoplastisches Polymermaterial ist. Dieses kann das gleiche Polymergrundmaterial sein wie das erste thermoplastische Polymermaterial, es kann aber auch ein anderes thermoplastisches Polymermaterial sein. Beim Verschweißen von zwei thermoplastischen Materialien wird durch das Erhitzen und Erweichen des ersten Materials durch Wärmeübertragung auch das angrenzende zweite Material erweicht, so daß an der Schweißstelle eine Schmelze der beiden Materialien entsteht, die beim Abkühlen und Verfestigen eine gute Verbindung zwischen den beiden Materialien liefert. Alternativ kann das zweite Material aber auch ein nicht erweichendes Material sein, an welchem das erweichte erste Material nach dem Verfestigen gut bzw. ausreichend gut haftet. Ob als zweites Material ein nicht thermoplastisches Material geeignet ist, hängt von der jeweiligen Anwendung und den Anforderungen an die Festigkeit der Verbindung zwischen den beiden Materialien ab. Beispielsweise kann durch das erfindungsgemäße Verfahren zum Laserschweißen ein thermoplastisches Polymermaterial (erstes Material) mit einem bei den entstehenden Temperaturen nicht thermoplastischen Material, wie beispielsweise Glas, verbunden werden.

Die erfindungsgemäß geeigneten thermoplastischen Polymermaterialien, welche die erfindungsgemäßen Additive enthalten und für das Laserschweißen geeignet sind, sind keinen besonderen Beschränkungen unterworfen, solange sie bei den üblichen Temperaturen des Laserschweißens im Bereich von etwa 150 bis 350°C ausreichend erweichen. Beispiele für bevorzugt einsetzbare thermoplastische Polymere sind Polyacetale, Polyester, Polyamide, Polyarylenether, Polyarylensulfide, Polyethersulfone, Polysulfone, Polyaryletherketone, Polyolefine, flüssigkristalline Polymere, welche gegebenenfalls weitere thermoplastische Polymere als Blendpartner enthalten können. Erfindungsgemäß geeignete Polyacetale im Sinne dieser Beschreibung sind Polymere, die als Hauptwiederholungseinheit Oxymethylengruppen (CH₂O-) aufweisen. Sie umfassen Polyoxymethylen-Homopolymere, -Copolymere, -Terpolymere und -Blockcopolymere.

Erfindungsgemäß geeignete Polyester im Sinne dieser Beschreibung sind thermoplastische Polymere mit sich wiederholenden Estergruppen in der Hauptkette. Beispiele sind Polykondensationsprodukte der Naphthalincarbonsäuren, Terephthalsäure, Isophthalsäure, Adipinsäure, Azelainsäure, Sebacinsäure, Dodecandisäure, Cyclohexandicarbonsäuren, Mischungen dieser Carbonsäuren mit esterbildenden Derivaten mit zweiwertigen Alkoholen, wie beispielsweise Ethylenglycol, 1,3-Propandiol, 1,4-Butandiol, 1,4-Butendiol, 1,6-Hexandiol, 1,4-Hexandiol, 1,4-Cyclohexandiol, 1,4-Dihydroxymethylcyclohexan, Bisphenol A, Neopentylglycol, Oligo- und Polyethylenglycole, Oligo- und Polypropylenglycole, Oligo- und Polytetramethylenglycole, Mischungen dieser Diole sowie esterbildende Derivate davon.

Erfindungsgemäß besonders bevorzugte Polymermatrixmaterialien sind Polyethylenterephthalat, Polybutylenterephthalat und Polyetheresterblockcopolymere.

Es kann auch zweckmäßig sein, den Polymeren zusätzlich anorganische Oxide und/oder weitere farbgebende Additive und/oder übliche, bestimmte Eigenschaften modifizierende Additive zuzusetzen, wie UV-Stabilisatoren, Stabilisatoren gegen Verwitterung, Stabilisatoren gegen thermische und thermooxidative Angriffe, Stabilisatoren zur Verbesserung der hydrolytischen und azidolytischen Beständigkeit, Gleitmittel, Entformungshilfen, kristallisationsregulierende Substanzen und Nukleirungsmittel, Füllstoffe, Weichmacher, Flammschutzmittel und andere Zusatzstoffe.

Die vorliegende Erfindung umfaßt auch ein laserschweißbares thermoplastisches Polymermaterial, das 0,001 bis 20 Gew.-% eines oder mehrerer Metallphosphate und/oder Metallphosphite enthält, die eine mittlere Teilchengröße (D50) von weniger als 50 µm haben. Des weiteren umfaßt die Erfindung auch ein Verfahren zur Herstellung eines laserschweißbaren thermoplastischen Polymermaterials, bei dem man 0,001 bis 20 Gew.-% eines oder mehrerer Metallphosphate und/oder Metallphosphite in ein thermoplastisches Polymermaterial einarbeitet. Die Metallphosphate und/oder Metallphosphite sind dabei wie oben definiert.

In einer besonderen Ausführungsform des erfindungsgemäßen Verfahrens zur Herstellung eines laserschweißbaren thermoplastischen Polymermaterials arbeitet man zunächst eine hohe Konzentration der Metallphosphate und/oder Metallphosphite im Bereich von 10 bis 40 Gew.-%, vorzugsweise 20 bis 30 Gew.-% in ein thermoplastisches Polymermaterial ein. Dieser sogenannte Master-Batch läßt sich dann durch Mischen mit dem gleichen oder einem anderen thermoplastischen Polymermatrixmaterial ohne das jeweilige Additiv auf die gewünschte Endkonzentration der Additive verdünnen. Dies erfolgt vorteilhaft, indem man das Master-Batch-Material zerkleinert und in eine schüttfähige Form bringt, wie beispielsweise in die Form von Granulat, Flocken, Perlen etc. Anschließend wird dieses Master-Batch-Material in schüttfähiger Form mit einer Menge des gleichen oder eines anderen thermoplastischen Polymermaterials (ohne Additiv) in ebenfalls schüttfähiger Form in einem Verhältnis gemischt, so daß die Menge der in dem Gemisch enthaltenen Metallphosphate und/oder Metallphosphite der gewünschten Endkonzentration im Bereich von 0,001 bis 20 Gew.-% entspricht. Das Gemisch wird dann unter Erhitzen erweicht und das Material homogenisiert. Zweckmäßigerweise wird man dieses homogenisierte Material aus dem noch erweichten Zustand gleich in die gewünschte Form für das laserschweißbare thermoplastische Polymermaterial bringen, wie beispielsweise in die Form von Folien, Platten, Bögen oder anderen Formteilen.

### Beispiele

Für die Vergleichbarkeit von Laserschweißverbindungen, die zwischen verschiedenen Polymermaterialien mit unterschiedlichen erfindungsgemäßen Additiven in unterschiedlichen Mengen hergestellt wurden, wurde nach dem Laserverschweißen ein Haltbarkeitstest durchgeführt. Zwischen den zu verschweißenden Materialien wurde eine Schweißnaht mit einer Länge von 3 cm und einer Breite von 2-3 mm erzeugt. Nach der Verfestigung der Schweißnaht wurde diese einem Belastungstest unterzogen, indem eines der beiden verschweißten Materialien von einem Ende der Schweißnaht ausgehend in senkrechter Richtung zu den verschweißten Oberflächen angehoben bzw. abgezogen wurde, bis die Schweißnaht aufriß und die Materialien voneinander getrennt wurden. Die für die Zerstörung der Schweißnaht und das Trennen der Materialien erforderliche Kraft war ein Maß für die Qualität und Haltbarkeit der erzeugten Schweißnaht. Die Haltbarkeitskriterien wurden wie folgt eingestuft: "++" = sehr gute Haltbarkeit, "+" = gute Haltbarkeit, "+/-" = befriedigende Haltbarkeit, "-" = schlechte Haltbarkeit, "--" = sehr schlechte Haltbarkeit.

### Beispiel 1

Ein Polypropylen-Matrixmaterial wurde erweicht und mit 1 Gew.-% Kupfer-Hydroxidphosphat versetzt und anschließend zu einer Folie mit einer Dicke von 0,5 mm geformt. Die Folie war im sichtbaren Wellenlängenbereich transparent. Auf die mit 1 Gew.-% KHP versetzte Folie wurde eine entsprechende Polypropylenfolie ohne den Zusatz von KHP aufgelegt und mit einem Nd:YAG-Laser mit einer Wellenlänge von 1064 nm und einer Energiedichte von 5 J/cm² eine Schweißnaht erzeugt. Die Haltbarkeit der Schweißnaht war "++".

### Beispiel 2

Ein Polyethylen-Matrixmaterial wurde erweicht und mit 20 Gew.-% Kupfer-Phosphat versetzt. Dieses Master-Batch-Material wurde nach dem Erstarren zerkleinert (granuliert) und mit einem entsprechenden granulierten Polyethylen-Matrixmaterial ohne Zusatz von Kupfer-Phosphat in einem Verhältnis von 1:40 gemischt, unter Erweichen erhitzt und homogenisiert, so daß die Endkonzentration an Kupferphosphat in dem erhaltenen Polyethylen-Matrixmaterial 0,5 Gew.-% betrug. Das erweichte Material wurde zu einer Folie mit einer Dicke von 0,5 mm weiterverarbeitet. Auf diese Folie wurde eine entsprechende Polyethylenfolie ohne Kupfer-Phosphat aufgelegt und mittels eines Diodenlasers mit einer Wellenlänge von 808 nm und einer Energiedichte von 5 J/cm² eine Schweißnaht erzeugt. Die Haltbarkeit der Schweißnaht war "+/-".

### Beispiel 3

Ein Polyvinylchlorid-Matrixmaterial wurde erweicht und mit 0,3 Gew.-% Kupfer-Hydroxidphosphat versetzt und zu einer Folie weiterverarbeitet, wie es in den vorangegangenen Beispielen beschrieben ist. Auf diese Folie wurde eine entsprechende Polyvinylchlorid-Folie aufgelegt und mit einem Diodenlaser mit einer Wellenlänge von 940 nm und einer Energiedichte von 5 J/cm² eine Schweißnaht erzeugt. Die Haltbarkeit der Schweißnaht war "++".

### Beispiel 4

Ein Polybutylenterephthalat-Matrixmaterial wurde erweicht und mit 0,5 Gew.-% Trikupfer-Phosphat versetzt und zu einer Folie weiterverarbeitet. Auf diese Folie wurde eine entsprechende Polybutylenterephthalat-Folie ohne Trikupfer-Phosphat aufgelegt und mit einem Nd:YAG-Laser mit einer Wellenlänge von 1064 nm und einer Energiedichte von 5 J/cm² eine Schweißnaht erzeugt. Die Haltbarkeit der Schweißnaht war "+".

### Beispiel 5

Ein Polyamid-Matrixmaterial wurde erweicht und mit 2 Gew.-% Zinn-Phosphat versetzt und zu einer Platte von 5 cm x 5 cm x 5 mm gegossen. Auf diese Platte wurde eine entsprechende Polyamid-Platte ohne Zinn-Phosphat aufgelegt und mit einem Diodenlaser mit einer Wellenlänge von 940 nm und einer Energiedichte von 5 J/cm² eine Schweißnaht erzeugt. Die Haltbarkeit der Schweißnaht war "+/-".

### Beispiel 6

Ein Polyamid-Matrixmaterial wurde erweicht und mit 2 Gew.-% Eisen-Phosphit versetzt und zu einer Platte von 5 cm x 5 cm x 5 mm gegossen. Auf diese Platte wurde eine entsprechende Polyamid-Platte ohne Eisen-Phosphit aufgelegt und mit einem Diodenlaser mit einer Wellenlänge von 808 nm und einer Energiedichte von 5 J/cm² eine Schweißnaht erzeugt. Die Haltbarkeit der Schweißnaht war "+".

### Beispiel 7

Ein Polyoxymethylen-Matrixmaterial wurde erweicht und mit 0,4% Kupfer-Hydroxidphosphat versetzt und eine Platte mit Abmessungen von 5 cm x 5 cm x 5 mm gegossen. Auf diese Platte wurde eine entsprechende Polyoxymethylen-Platte ohne Kupfer-Hydroxidphosphat aufgelegt und mit einem Diodenlaser mit einer Wellenlänge von 940 nm und einer Energiedichte von 5 J/cm² eine Schweißnaht erzeugt. Die Haltbarkeit der Schweißnaht war "++".

### Beispiel 8

Ein Polyvinylchlorid-Matrixmaterial wurde erweicht und mit 0,8 Gew.-% Kupfer-Hydroxidphosphat versetzt und zu einer Folie weiterverarbeitet, wie es in den vorangegangenen Beispielen beschrieben ist. Auf diese Folie wurde eine entsprechende Polyvinylchlorid-Folie aufgelegt und mit einem Diodenlaser mit einer Wellenlänge von 940 nm und einer Energiedichte von 5 J/cm² eine Schweißnaht erzeugt. Die Haltbarkeit der Schweißnaht war "++".

### Beispiel 9

Ein Polypropylen-Matrixmaterial wurde erweicht und mit 1 Gew.-% Kupfer-Hydroxidphosphat versetzt und zu einer Platte mit Abmessungen von 5 cm x 5 cm x 5 mm gegossen. Anschließend wurde die Absorptionsfähigkeit des Materials für Nd:YAG-Laserlicht mit einer Wellenlänge von 1064 nm und von Diodenlaserlicht mit einer Wellenlänge von 808 nm mit einem TMG Vario der Firma LaserQuipment gemessen. Die Absorption bei 1064 nm betrug über 98% und bei 808 nm über 90%.

## Patentansprüche

1. Verfahren zum Laserschweißen eines ersten Materials, welches ein thermoplastisches Polymermaterial ist, mit einem zweiten Material, welches für das verwendete Laserlicht durchlässig ist, wobei man für das Laserschweißen das Laserlicht an der Schweißstelle durch das zweite Material auf das erste Material (A) richtet und wenigstens das erste Material an der Schweißstelle unter der Einwirkung des Laserlichts erweicht, **dadurch gekennzeichnet, daß** das erste Material 0,001 bis 20 Gew.-% eines oder mehrerer Metallphosphate und/oder Metallphosphite enthält, die eine mittlere Teilchengröße (D50) von weniger als 50 µm haben.

2. Verfahren nach Anspruch 1, **dadurch gekennzeichnet, daß** die Metallphosphate unter Orthophosphaten, Polyphosphaten, Pyrophosphaten und Hydroxidphosphaten ausgewählt sind.

3. Verfahren nach einem der vorangegangenen Ansprüche, **dadurch gekennzeichnet, daß** die Metallphosphate unter Kupfer-Phosphaten, Zinn-Phosphaten, Eisen-Phosphaten, Nickel-Phosphaten, Molybdän-Phosphaten, Kobalt-Phosphaten, Mangan-Phosphaten und Antimon-Phosphaten und besonders bevorzugt unter Kupfer-Phosphaten, Zinn-Phosphaten und Eisen-Phosphaten ausgewählt sind.

4. Verfahren nach einem der vorangegangenen Ansprüche, **dadurch gekennzeichnet, daß** das Metallphosphat Kupfer-Hydroxidphosphat [KHP; Cu₄(OH)₂(PO₄)₂] ist.

5. Verfahren nach einem der vorangegangenen Ansprüche, **dadurch gekennzeichnet, daß** das erste Material 0,1 bis 10 Gew.-%, vorzugsweise 0,2 bis 5 Gew.-%, besonders bevorzugt 0,3 bis 2 Gew.-% eines oder mehrerer Metallphosphate und/oder Metallphosphite enthält.

6. Verfahren nach einem der vorangegangenen Ansprüche, **dadurch gekennzeichnet, daß** das oder die Metallphosphate und/oder Metallphosphite eine mittlere Teilchengröße (D50) von weniger als 15 µm, bevorzugt von weniger als 10 µm haben.

7. Verfahren nach einem der vorangegangenen Ansprüche, **dadurch gekennzeichnet, daß** man für das Laserschweißen Laserlicht mit einer Wellenlänge im Bereich von 266 bis 980 nm oder im Bereich von 980 bis 10000, vorzugsweise einer Wellenlänge von 808 nm, 940 nm, 1064 nm oder von etwa 10000 nm verwendet.

8. Verfahren nach einem der vorangegangenen Ansprüche, **dadurch gekennzeichnet, daß** man für das Laserschweißen einen Dioden-Laser, einen NdYAG-Laser oder einen CO₂-Laser verwendet.

9. Verwendung von Metallphosphaten und/oder Metallphosphiten zur Herstellung eines laserschweißbaren thermoplastischen Polymermaterials, wobei das Polymermaterial die Metallphosphate und/oder Metallphosphite mit einer mittleren Teilchengröße (D50) von weniger als 50 µm in einer Menge von 0,001 bis 20 Gew.-% enthält.

10. Verwendung nach Anspruch 9, wobei die Metallphosphate und/oder Metallphosphite gemäß den Ansprüchen 2 bis 6 definiert sind.

11. Laserschweißbares thermoplastisches Polymermaterial, welches 0,001 bis 20 Gew.-% eines oder mehrerer Metallphosphate und/oder Metallphosphite enthält. **dadurch gekennzeichnet, daß** die Metallphosphate und/oder Metallphosphite eine mittlere Teilchengröße (D50) von weniger als 50 µm haben.

12. Laserschweißbares thermoplastisches Polymermaterial nach Anspruch 11, wobei die Metallphosphate und/oder Metallphosphite gemäß den Ansprüchen 2 bis 6 definiert sind.

13. Laserschweißbares thermoplastisches Polymermaterial nach einem der Ansprüche 11 oder 12, hergestellt, indem man ein thermoplastisches Polymermaterial erweicht und 0,001 bis 20 Gew.-% der Metallphosphate und/oder Metallphosphite einarbeitet.

14. Laserschweißbares thermoplastisches Polymermaterial nach einem der Ansprüche 11 bis 13, hergestellt indem man ein
i) 10 bis 40 Gew.-%, vorzugsweise 20 bis 30 Gew.-% der Metallphosphate und/oder Metallphosphite ein thermoplastisches Polymermaterial einarbeitet,
ii) das Material aus Stufe i) in eine schüttfähige Form bringt, vorzugsweise in die Form von Granulat, Flocken, Perlen,
iii) das Material in schüttfähiger Form aus Stufe ii) mit einer Menge des gleichen thermoplastischen Polymermaterials in ebenfalls schüttfähiger Form in einem Verhältnis mischt, so daß die Menge der in dem Gemisch enthaltenen Metallphosphate und/oder Metallphosphite der gewünschten Entkonzentration im Bereich von 0,001 bis 20 Gew.-% entspricht,
iv) das Gemisch aus Stufe iii) unter Erhitzen erweicht und das Material homogenisiert.

## Claims

1. A method of laser welding a first material which is a thermoplastic polymer material to a second material which is transparent for the laser light used, wherein for the laser welding operation the laser light is directed at the welding location through the second material on to the first material (A) and at least the first material softens at the welding location under the action of the laser light, **characterised in that** the first material contains 0.001 to 20% by weight of one or more metal phosphates and/or metal phosphites which have a mean particle size (D50) of less than 50 µm.

2. A method according to claim 1 **characterised in that** the metal phosphates are selected from orthophosphates, polyphosphates, pyrophosphates and hydroxyphosphates.

3. A method according to one of the preceding claims **characterised in that** the metal phosphates are selected from copper phosphates, tin phosphates, iron phosphates, nickel phosphates, molybdenum phosphates, cobalt phosphates, manganese phosphates and antimony phosphates and particularly preferably from copper phosphates, tin phosphates and iron phosphates.

4. A method according to one of the preceding claims **characterised in that** the metal phosphate is copper hydroxyphosphate [CHP; Cu₄(OH)₂(PO₄)₂].

5. A method according to one of the preceding claims **characterised in that** the first material contains 0.1 to 10% by weight and preferably 0.2 to 5% by weight and particularly preferably 0.3 to 2% by weight of one or more metal phosphates and/or metal phosphites.

6. A method according to one of the preceding claims **characterised in that** the metal phosphate(s) and metal phosphite(s) has or have a mean particle size (D50) of less than 15 µm, preferably less than 10 µm.

7. A method according to one of the preceding claims **characterised in that** the laser welding operation entails using laser light of a wavelength in the range of 266 to 980 nm or in the range of 980 to 10,000, preferably a wavelength of 808 nm, 940 nm, 1064 nm or about 10,000 nm.

8. A method according to one of the preceding claims **characterised in that** a diode laser, an NdYAG laser or a CO₂ laser is used for the laser welding operation.

9. Use of metal phosphates and/or metal phosphites for the production of a laser-weldable thermoplastic polymer material wherein the polymer material contains the metal phosphates and/or metal phosphites of a mean particle size (D50) of less than 50 µm in an amount of 0.001 to 20% by weight.

10. Use according to claim 9 wherein the metal phosphates and/or metal phosphites are defined according to claims 2 to 6.

11. Laser-weldable thermoplastic polymer material which contains 0.001 to 20% by weight of one or more metal phosphates and/or metal phosphites **characterised in that** the metal phosphates and/or metal phosphites have a mean particle size (D50) of less than 50 µm.

12. Laser-weldable thermoplastic polymer material according to claim 11 wherein the metal phosphates and/or metal phosphites are defined according to claims 2 to 6.

13. Laser-weldable thermoplastic polymer material according to one of claims 11 and 12 produced by softening a thermoplastic polymer material and incorporating 0.001 to 20% by weight of the metal phosphates and/or metal phosphites.

14. Laser-weldable thermoplastic polymer material according to one of claims 11 to 13 produced by a procedure wherein
i) 10 to 40% by weight, preferably 20 to 30% by weight of the metal phosphates and/or metal phosphites is incorporated into a thermoplastic polymer material,
ii) the material from step i) is put into a pourable form, preferably in the form of granules, flakes or beads,
iii) the material in pourable form from step ii) is mixed with an amount of the same thermoplastic polymer material in also pourable form in a ratio so that the amount of the metal phosphates and/or metal phosphites contained in the mixture corresponds to the desired final concentration in the range of 0.001 to 20% by weight, and
iv) the mixture from step iii) is softened under the effect of heating and the material homogenised.

## Revendications

1. Procédé pour souder au laser un premier matériau, lequel est un matériau polymère thermoplastique, avec un deuxième matériau, lequel est perméable à la lumière laser utilisée, dans lequel on dirige la lumière laser pour le soudage au laser sur la zone à souder à travers le deuxième matériau sur le premier matériau (A) et on amollit au moins le premier matériau sur la zone à souder sous l'effet de la lumière laser, **caractérisé en ce que** le premier matériau contient de 0,001 à 20 % en poids d'un ou plusieurs phosphates métalliques et/ou phosphites métalliques, qui ont une taille particulaire moyenne (D50) inférieure à 50 µm.

2. Procédé selon la revendication 1, **caractérisé en ce que** les phosphates métalliques sont choisis parmi des orthophosphates, polyphosphates, pyrophosphates et hydroxyphosphates.

3. Procédé selon l'une des revendications précédentes, **caractérisé en ce que** les phosphates métalliques sont choisis parmi des phosphates de cuivres, phosphates d'étain, phosphates de fer, phosphates de nickel, phosphates de molybdène, phosphates de cobalt, phosphates de manganèse et phosphates d'antimoine, et en particulier de préférence parmi des phosphates de cuivre, phosphates d'étain et phosphates de fer.

4. Procédé selon l'une des revendications précédentes, **caractérisé en ce que** le phosphate métallique est un hydroxyphosphate de cuivre [KHP ; Cu₄(OH)₂(PO₄)₂].

5. Procédé selon l'une des revendications précédentes, **caractérisé en ce que** le premier matériau contient de 0,1 à 10 % en poids, de préférence de 0,2 à 5 % en poids, en particulier de préférence de 0,3 à 2 % en poids d'un ou plusieurs phosphates métalliques et/ou phosphites métalliques.

6. Procédé selon l'une des revendications précédentes, **caractérisé en ce que** le ou les phosphates métalliques et/ou phosphites métalliques ont une taille particulaire moyenne (D50) inférieure à 15 µm, de préférence inférieure à 10 µm.

7. Procédé selon l'une des revendications précédentes, **caractérisé en ce qu'**on utilise pour le soudage au laser une lumière laser avec une longueur d'onde allant de 266 à 980 nm ou allant de 980 à 10 000 nm, de préférence une longueur d'onde de 808 nm, 940 nm, 1064 nm ou d'environ 10 000 nm.

8. Procédé selon l'une des revendications précédentes, **caractérisé en ce qu'**on utilise pour le soudage au laser un laser à diode, un laser NdYAG ou un laser au CO₂.

9. Utilisation de phosphates métalliques et/ou de phosphites métalliques pour fabriquer un matériau polymère thermoplastique soudable au laser, le matériau polymère contenant les phosphates métalliques et/ou phosphites métalliques avec une taille particulaire moyenne (D50) inférieure à 50 µm dans une quantité allant de 0,001 à 20 % en poids.

10. Utilisation selon la revendication 9, les phosphates métalliques et/ou phosphites métalliques étant définis selon les revendications 2 à 6.

11. Matériau polymère thermoplastique soudable au laser, lequel contient de 0,001 à 20 % en poids d'un ou plusieurs phosphates métalliques et/ou phosphites métalliques, **caractérisé en ce que** les phosphates métalliques et/ou phosphites métalliques ont une taille particulaire moyenne (D50) inférieure à 50 µm.

12. Matériau polymère thermoplastique soudable au laser selon la revendication 11, les phosphates métalliques et/ou phosphites métalliques étant définis selon les revendications 2 à 6.

13. Matériau polymère thermoplastique soudable au laser selon l'une des revendications 11 ou 12, fabriqué en amollissant un matériau polymère thermoplastique et en incorporant de 0,001 à 20 % en poids des phosphates métalliques et/ou phosphites métalliques.

14. Matériau polymère thermoplastique soudable au laser selon l'une des revendications 11 à 13, fabriqué
i) en incorporant de 10 à 40 % en poids, de préférence de 20 à 30 % en poids des phosphates métalliques et/ou phosphites métalliques à un matériau polymère thermoplastique,
ii) en donnant au matériau issu de l'étape i) une forme exploitable en vrac, de préférence la forme de granulés, de flocons, de perles,
iii) en mélangeant le matériau sous forme exploitable en vrac issu de l'étape ii) avec une quantité du même matériau polymère thermoplastique également sous une forme exploitable en vrac dans une proportion telle que la quantité des phosphates métalliques et/ou phosphites métalliques contenus dans le mélange corresponde à la déconcentration souhaitée allant de 0,001 à 20 % en poids,
iv) en amollissant le mélange issu de l'étape iii) par réchauffement et en homogénéisant le matériau.
